# EUROPÄISCHE PATENTANMELDUNG

(11) **EP 4 745 807 A1**
(43) Veröffentlichungstag der Anmeldung: **20.05.2026**
(21) Anmeldenummer: 25215130.3
(22) Anmeldetag: 12.11.2025
(51) Int. Cl.: G06F 21/30, G06F 21/31, G06F 21/42, G06F 21/62, H04L 67/025, G06Q 10/20, A01B 76/00

(54) **VERFAHREN UND SYSTEM ZUM SICHEREN ABRUFEN VON MASCHINEN-DIAGNOSEDATEN FÜR EINE LANDWIRTSCHAFTLICHE MASCHINE**

(30) Priorität: 14.11.2024 DE 102024133366
(71) Anmelder: Kverneland Group Mechatronics BV, 2153 LR Nieuw-Vennep (NL)
(72) Erfinder: VAN ZON, Caspar Hubert Wim, 2153 LR Nieuw-Vennep (NL); STRAVERS, Thomas Jereon, 2153 LR Nieuw-Vennep (NL)
(74) Vertreter: Schlegel, Sebastian

(57) **Zusammenfassung**

Die Erfindung betrifft ein Verfahren und ein System zum sicheren Abrufen von Maschinen-Diagnosedaten für eine landwirtschaftliche Maschine (1). Bei dem Verfahren ist Folgendes vorgesehen: Empfangen einer Service-Anforderung eines Maschinennutzers einer landwirtschaftlichen Maschine (1) in einer ersten Computereinrichtung (2), die einem Service-Zentrum zugeordnet ist; Bereitstellen eines der Service-Anforderung zugeordneten Anfragecodes in der ersten Computereinrichtung (2); Übertragen des Anfragecodes über eine erste Datenverbindung (10) von der ersten Computereinrichtung (2) an eine Ausgabeeinrichtung; Ausgeben des Anfragecodes an den Maschinennutzer mittels der Ausgabeeinrichtung; Übertragen des Anfragecodes über eine zweite Datenverbindung (12) und Empfangen des Anfragecodes in einer dritten Computereinrichtung (15), die einer Service-Person zugeordnet ist; Übertragen des Anfragecodes von der dritten Computereinrichtung (15) an die erste Computereinrichtung (2) und Bereitstellen einer Diagnosezugriff-Anforderung in der ersten Computereinrichtung (2); Übertragen der Diagnosezugriff-Anforderung sowie Empfangen der Diagnosezugriff-Anforderung und Ausgeben der Diagnosezugriff-Anforderung an den Maschinennutzer mittels der Ausgabeeinrichtung; Empfangen einer Antwort-Eingabe des Maschinennutzers in der Ausgabeeinrichtung und Bereitstellen einer Antwort-Nachricht als Reaktion auf das Empfangen der Antwort-Eingabe; Empfangen der Antwort-Nachricht in der ersten Computereinrichtung (2) und Abrufen von Maschinen-Diagnosedaten für die landwirtschaftliche Maschine (1) über eine Datenschnittstelle der landwirtschaftlichen Maschine (1), wenn die Antwort-Nachricht eine Bestätigung des Maschinennutzers für die Diagnosezugriff-Anforderung anzeigt.

## Beschreibung

Die Erfindung betrifft ein Verfahren und ein System zum sicheren Abrufen von Maschinen-Diagnosedaten für eine landwirtschaftliche Maschine.

### Hintergrund

In Verbindung mit landwirtschaftlichen Maschinen kann zu Betriebs- oder Service-Zwecken vorgesehen sein, in einem Service-Zentrum, welches beispielsweise von dem Hersteller einer landwirtschaftlichen Maschine betrieben wird, Maschinen-Diagnosedaten für den Betrieb der eingesetzten landwirtschaftlichen Maschine zu erfassen. Die Maschinen-Diagnosedaten können insbesondere für die Nutzung der landwirtschaftlichen Maschine festgelegte oder voreingestellte Betriebsparameter, welche auch als "Settings" bezeichnet werden, und / oder im Betrieb erfasste oder gemessene Betriebsparameter betreffen. Im Fall einer landwirtschaftlichen Spritzmaschine betrifft dies zum Beispiel Betriebsparameter für die Menge des auszubringenden Spritzmaterials und / oder eine Arbeitsbreite der Spritzmaschine. Bei einer landwirtschaftlichen Streumaschine betreffen solche voreingestellten oder gemessenen Betriebsparameter beispielsweise Parameter für die Streueinrichtungen beim Ausbringen des Streumaterials, zum Beispiel eine Streubreite.

Beim Erfassen der Maschinen-Diagnosedaten kann zum Beispiel vorgesehen sein, dass das Service-Zentrum aus der Ferne auf einen Bordcomputer der landwirtschaftlichen Maschine zugreift, um die Maschinen-Diagnosedaten abzurufen. Im Dokument EP 1 852 007 B9 ist ein Datenverbindungssystem zwischen einem landwirtschaftlichen Bordcomputer zum Einstellen, Steuern und / oder Regeln von Landmaschinen und / oder deren Einstellelementen und Vorrichtungen mit einer bildschirmähnlichen Anzeigevorrichtung wie Display und einem Diagnose-und / oder Service-Computer offenbart. Der Bordcomputer ist mittels einer Datenfernübertragungseinrichtung mit einem Diagnose- und / oder Service-Computer verbindbar. Der Diagnose- und / oder Service-Computer weist eine Bedienungsvorrichtung und eine bildschirmähnliche Anzeige auf. Mit Hilfe der Datenübertragungseinrichtung ist zwischen dem Bordcomputer und dem Diagnose- und / oder Service-Computer eine Datenverbindung derart ausbildbar, dass auf der Anzeigevorrichtung des Diagnose- und / oder Service-Computers eine Kopie des Bildschirminhalts des Bordcomputers der Landmaschine darstellbar ist. Auf diese Weise erfolgt ein Fernzugriff auf den Bildschirminhalt des Bordcomputers durch den Diagnose- und / oder Service-Computer. Auf diese Weise erhält eine Service-Person, welche den Diagnose- und / oder Service-Computer nutzt, Zugriff auf Daten und Informationen, die auf der Anzeigenvorrichtung des Bordcomputers dargestellt werden, beispielsweise Betriebsparameter der landwirtschaftlichen Maschine.

### Zusammenfassung

Aufgabe der Erfindung ist es, ein Verfahren und ein System zum sicheren Abrufen von Maschinen-Diagnosedaten für eine landwirtschaftliche Maschine anzugeben, mit denen sichergestellt wird, dass nur eine berechtigte Person die Maschinen-Diagnosedaten abrufen kann.

Zur Lösung sind ein Verfahren und ein System zum sicheren Abrufen von Maschinen-Diagnosedaten für eine landwirtschaftliche Maschine nach den unabhängigen Ansprüchen 1 und 13 geschaffen. Ausgestaltungen sind Gegenstand von abhängigen Unteransprüchen.

Nach einem Aspekt ist ein Verfahren zum sicheren Abrufen von Maschinen-Diagnosedaten für eine landwirtschaftliche Maschine geschaffen, welches Folgendes aufweist: Empfangen einer Service-Anforderung eines Maschinennutzers einer landwirtschaftlichen Maschine in einer ersten Computereinrichtung, die einem Service-Zentrum zugeordnet ist; Bereitstellen eines der Service-Anforderung zugeordneten Anfragecodes in der ersten Computereinrichtung als Reaktion auf das Empfangen der Service-Anforderung; Übertragen des Anfragecodes über einen ersten Datenkanal von der ersten Computereinrichtung an (i) eine erste Ausgabeeinrichtung, die mit einer zweiten Computereinrichtung verbunden ist, welche auf der landwirtschaftlichen Maschine angeordnet ist, oder (ii) eine zweite Ausgabeeinrichtung eines ersten Nutzerendgeräts, welches dem Maschinennutzer zugeordnet ist; Ausgeben des Anfragecodes an den Maschinennutzer mittels der Ausgabeeinrichtung; Übertragen des Anfragecodes über einen zweiten Datenkanal, der getrennt von dem ersten Datenkanal ausgebildet wird, und Empfangen des Anfragecodes in einer dritten Computereinrichtung, die einer Service-Person zugeordnet ist; Übertragen des Anfragecodes von der dritten Computereinrichtung an die erste Computereinrichtung und Bereitstellen einer Diagnosezugriff-Anforderung als Reaktion auf den Empfang des Anfragecodes in der ersten Computereinrichtung; Übertragen der Diagnosezugriff-Anforderung sowie Empfangen der Diagnosezugriff-Anforderung und Ausgeben der Diagnosezugriff-Anforderung an den Maschinennutzer mittels der Ausgabeeinrichtung; Empfangen einer Antwort-Eingabe des Maschinennutzers in der Ausgabeeinrichtung und Bereitstellen einer Antwort-Nachricht als Reaktion auf das Empfangen der Antwort-Eingabe; Empfangen der Antwort-Nachricht in der ersten Computereinrichtung und Abrufen von Maschinen-Diagnosedaten für die landwirtschaftliche Maschine über eine Datenschnittstelle der landwirtschaftlichen Maschine, wenn die Antwort-Nachricht eine Bestätigung des Maschinennutzers für die Diagnosezugriff-Anforderung anzeigt, und Empfangen der Maschinen-Diagnosedaten in der ersten Computereinrichtung.

Nach einem weiteren Aspekt ist ein System zum sicheren Abrufen von Maschinen-Diagnosedaten für eine landwirtschaftliche Maschine geschaffen, welches Folgendes aufweist: eine landwirtschaftliche Maschine, eine erste Computereinrichtung, die einem Service-Zentrum zugeordnet ist, eine zweite Computereinrichtung, die auf der landwirtschaftlichen Maschine angeordnet ist, und eine dritte Computereinrichtung, die einer Service-Person zugeordnet ist. Das System ist für Folgendes eingerichtet: Empfangen einer Service-Anforderung des Maschinennutzers der landwirtschaftlichen Maschine in der ersten Computereinrichtung; Bereitstellen eines der Service-Anforderung zugeordneten Anfragecodes in der ersten Computereinrichtung als Reaktion auf das Empfangen der Service-Anforderung; Übertragen des Anfragecodes über einen ersten Datenkanal von der ersten Computereinrichtung an (i) eine erste Ausgabeeinrichtung, die mit einer zweiten Computereinrichtung verbunden ist, welche auf der landwirtschaftlichen Maschine angeordnet ist, oder (ii) eine zweite Ausgabeeinrichtung eines ersten Nutzerendgeräts, welches dem Maschinennutzer zugeordnet ist; Ausgeben des Anfragecodes an den Maschinennutzer mittels der Ausgabeeinrichtung; Übertragen des Anfragecodes über einen zweiten Datenkanal, der getrennt von dem ersten Datenkanal ausgebildet wird, und Empfangen des Anfragecodes in der zweiten Computereinrichtung; Übertragen des Anfragecodes von der zweiten Computereinrichtung an die erste Computereinrichtung und Bereitstellen einer Diagnosezugriff-Anforderung als Reaktion auf den Empfang des Anfragecodes in der ersten Computereinrichtung; Übertragen der Diagnosezugriff-Anforderung sowie Empfangen der Diagnosezugriff-Anforderung und Ausgeben der Diagnosezugriff-Anforderung an den Maschinennutzer mittels der Ausgabeeinrichtung; Empfangen einer Bestätigungs-Eingabe des Maschinennutzers in der Ausgabeeinrichtung und Bereitstellen einer Bestätigungs-Nachricht als Reaktion auf das Empfangen der Bestätigungs-Eingabe; Empfangen der Bestätigungs-Nachricht in der ersten Computereinrichtung und Abrufen von Maschinen-Diagnosedaten für die landwirtschaftliche Maschine über eine Datenschnittstelle der landwirtschaftlichen Maschine und Empfangen der Maschinen-Diagnosedaten in der ersten Computereinrichtung, insbesondere über den ersten Datenkanal.

Es sind so mehrere Sicherheitsstufen oder -schichten vorgesehen, um beim Abrufen der Maschinen-Diagnosedaten von der landwirtschaftlichen Maschine einen sicheren Zugriff auf die Maschinen-Diagnosedaten zu unterstützen, insbesondere zum Vermeiden eines missbräuchlichen Zugriffs auf die Maschinen-Diagnosedaten. Die landwirtschaftliche Maschine kann eine Landmaschine unterschiedlicher Art sein, beispielsweise ein Düngerstreuer, eine Spritzmaschine, eine Sämaschine, eine Bodenbearbeitungsmaschine, eine Erntemaschine, eine Mähmaschine oder dergleichen.

Ist für die landwirtschaftliche Maschine das Abrufen von Maschinen-Diagnosedaten beabsichtigt, ist vorgesehen, dass in einer ersten Computereinrichtung, die einem Service-Zentrum zugeordnet ist, eine Service-Anforderung eines Nutzers oder Betreibers der landwirtschaftlichen Maschine (Maschinennutzer) empfangen wird. Das Service-Zentrum kann zum Beispiel von einem Hersteller der landwirtschaftlichen Maschine und / oder einem Service-Unternehmen für Landmaschinen betrieben werden. Auf dem Empfang der Service-Anforderung wird in der ersten Computereinrichtung ein Anfragecode bereitgestellt, welcher der Service-Anforderung zugeordnet ist. Hierbei kann vorgesehen sein, dass für jede in der ersten Computereinrichtung des Service-Zentrums empfangene Service-Anforderung jeweils ein anderer Anfragecode bereitgestellt wird. Der Anfragecode kann in der ersten Computereinrichtung auf den Empfang der Service-Anforderung erzeugt werden. Bei dem Anfragecode kann es sich um einen Zufallscode handeln, der jeweils auf den Empfang einer Service-Anforderung und dieser zugeordnet erzeugt wird. Zum Beispiel handelt es sich bei dem Anfragecode um einen alphanummerischen Code. Auch kann vorgesehen sein, dass der Anfragecode einen Datenmatrixcode, zum Beispiel einen QR-Code, umfasst oder von diesem gebildet ist.

Der Anfragecode wird über einen ersten Datenkanal von der ersten Computereinrichtung des Service-Zentrums an eine Ausgabeeinrichtung übertragen, die betreibbar ist, den Anfragecode an den Maschinennutzer auszugeben. Hierbei kann es sich um eine erste Ausgabeeinrichtung handeln, die mit einer zweiten Computereinrichtung verbunden ist, welche auf der landwirtschaftlichen Maschine angeordnet ist. Mit der zweiten Computereinrichtung kann zum Beispiel ein Bordcomputer der landwirtschaftlichen Maschine gebildet sein. Alternativ oder ergänzend kann der Anfragecode an eine zweite Ausgabeeinrichtung übertragen werden, die Teil eines ersten Nutzerendgeräts ist, welches dem Maschinennutzer zugeordnet ist. Die Ausgebeeinrichtung kann mittels einer Nutzerschnittstelle des Nutzerendgeräts gebildet sein, zum einer Ein- / Ausgabeeinrichtung. Bei dem ersten Nutzerendgerät kann es sich zum Beispiel um ein Mobiltelefon oder einen Laptop-Computer des Maschinennutzers handeln. Mit Hilfe der ersten und / oder der zweiten Ausgabeeinrichtung wird der Anfragecode an den Maschinennutzer ausgegeben.

Sodann ist vorgesehen, den Anfragecode, welcher an den Maschinennutzer ausgegeben wurde, über einen zweiten Datenkanal, der zum Zweck der Datensicherheit getrennt von dem ersten Datenkanal gebildet wird, zu übertragen und den Anfragecode in einer dritten Computereinrichtung zu empfangen, die einer Service-Person zugeordnet ist, zum Beispiel über eine Eingabeeinrichtung der dritten Computereinrichtung, beispielsweise als Sprach- oder Texteingabe.

Von der dritten Computereinrichtung wird der empfangene Anfragecode an die erste Computereinrichtung übertragen. Als Reaktion auf den Empfang des Anfragecodes in der ersten Computereinrichtung wird eine Diagnosezugriff-Anforderung bereitgestellt. Diese zeigt an, dass von Seiten der ersten Computereinrichtung, also dem Service-Zentrum, ein Zugriff auf Maschinen-Diagnosedaten der landwirtschaftlichen Maschine gewünscht oder angefordert ist. Die Diagnose-Anforderung wird übertragen, insbesondere über den ersten Datenkanal, und von der Ausgabeeinrichtung empfangen, welche die Diagnosezugriff-Anforderung an den Maschinennutzer ausgibt. Bei der Ausgabeeinrichtung kann es sich um die erste oder die zweite Ausgabeeinrichtung handeln. In einer Ausgestaltung kann vorgesehen sein, dass der Anfragecode in der zweiten Ausgabeeinrichtung des ersten Nutzerendgeräts empfangen und ausgegeben wird, wohingegen die Diagnosezugriff-Anforderung in der ersten Ausgabeeinrichtung der zweiten Computereinrichtung empfangen und ausgegeben wird. Die jeweilige Ausgabeeinrichtung kann nicht nur zum Ausgeben von Daten betreibbar sein, sondern ergänzend zum Empfangen von Dateneingaben, insbesondere Benutzereingaben des Maschinennutzers, womit eine Ein-/ Ausgabeeinrichtung gebildet ist.

Es wird sodann eine Antwort-Eingabe des Maschinennutzers nach dem Ausgeben der Diagnosezugriff-Anforderung empfangen, zum Beispiel über die Ausgabeeinrichtung, worauf eine Antwort-Nachricht als Reaktion auf den Empfang der Antwort-Eingabe bereitgestellt wird, zum Beispiel in der Ausgabeeinrichtung und / oder der zweiten Computereinrichtung. Die Antwort-Nachricht wird in der ersten Computereinrichtung empfangen. Wenn die Antwort-Nachricht eine Bestätigung des Maschinennutzers für die Diagnosezugriff-Anforderung anzeigt, werden Maschinen-Diagnosedaten für die landwirtschaftliche Maschine über eine Datenschnittstelle der landwirtschaftlichen Maschine abgerufen und in der ersten Computereinrichtung empfangen.

Die beschriebene Technologie unterstützt einen effizienten und sicheren Abruf der Maschinen-Diagnosedaten, bei dem die verschiedenen vorgesehenen Sicherheitsstufen zu durchlaufen sind.

Der Zugriff zum Abrufen der Maschinen-Diagnosedaten kann durch die erste Computereinrichtung erfolgen, so dass die Maschinen-Diagnosedaten von der ersten Computereinrichtung abgerufen werden.

Das Abrufen der Maschinen-Diagnosedaten kann über die Datenverbindung erfolgen, mittels welcher der Anfragecode von der ersten Computereinrichtung an die Ausgabeeinrichtung übermittelt wurde. Alternativ kann für den Abruf der Maschinen-Diagnosedaten eine neue Datenverbindung ausgebildet werden, insbesondere unter Verwendung des ersten Datenkanals, über welchen bereits die Datenverbindung zum Übermitteln des Anfragecodes hergestellt wurde und der das Herstellen von Datenverbindungen zwischen der ersten Computereinrichtung und dem Datenbussystem der landwirtschaftlichen Maschine ermöglicht. Das Übertragen des Anfragecodes an die Ausgabeeinrichtung zum Ausgeben an den Maschinennutzer einerseits und das Übermitteln des Anfragecodes an die Service-Person erfolgt über voneinander getrennte Datenkanäle, was die Sicherheit zusätzlich unterstützt.

Die abgerufenen Maschinen-Diagnosedaten können beliebige Betriebsparameter für die landwirtschaftliche Maschine umfassen, insbesondere für den Betrieb der landwirtschaftlichen Maschine (vor-)eingestellte oder festgesetzte Betriebsparameter und / oder im Betrieb der landwirtschaftlichen Maschine gemessene Betriebsparameter.

Die unterschiedlichen Computereinrichtungen weisen jeweils ein oder mehrere Prozessoren zum Verarbeiten von elektronischen Daten sowie eine zugeordnete Speichereinrichtung auf. Mit Hilfe jeweiliger Programmierung (Software) können die Computereinrichtungen für sie unterschiedlichen Aufgabe und Funktionen eingerichtet werden, so dass die Computereinrichtung für den jeweils gewünschten Zweck betreibbar ist. So kann mit der zweiten Computereinrichtung ein Bordcomputer der landwirtschaftlichen Maschine gebildet sein, welcher es dem Maschinennutzer zum Beispiel ermöglicht, die landwirtschaftliche Maschine und / oder Funktionselemente oder -vorrichtungen dieser zu betreiben und / oder im Betrieb zu steuern. Die erste Computereinrichtung ist dem Service-Zentrum zugeordnet und bildet zum Beispiel einen Teil einer zentralen Servereinrichtung des Service-Zentrums. Die dritte Computereinrichtung kann zum Beispiel mit einem Personalcomputer, einem Laptop-Computer oder einem anderen mobilen Gerät der Service-Person gebildet sein.

In einer Ausführungsform kann ergänzend vorgesehen sein, dass es der Service-Person mittels der dritten Computereinrichtung über die erste Computereinrichtung ermöglicht ist, in Ergänzung zum Abrufen der Maschinen-Diagnosedaten für den Betrieb der landwirtschaftlichen Maschine eingestellte Betriebsparameter neu einzustellen oder zu ändern. Wenn die Service-Person zum Beispiel anhand der abgerufenen Maschinen-Diagnosedaten feststellt, dass diese für eine Betriebssituation nicht geeignet sind oder verschiedene eingestellte Betriebsparameter untereinander im Konflikt stehen, kann die Service-Person auf diese Weise dem Problem abhelfen.

Demgegenüber ist ein (Fern-)Zugriff der Service-Person über die dritte und die erste Computereinrichtung auf den tatsächlichen Betrieb der landwirtschaftlichen Maschine und / oder eines Funktionselementes der landwirtschaftlichen Maschine blockiert, dahingehend, dass zum Beispiel die zweite Computereinrichtung auf der landwirtschaftlichen Maschine eine solches Zugriffsversuch der ersten und / oder der dritten Computereinrichtung blockiert oder verhindert. Auf diese Weise wird sichergestellt, dass durch einen von der Service-Person initiierten Betrieb der landwirtschaftlichen Maschine und / oder eines Funktionselements der landwirtschaftlichen Maschine eine Gefahrensituation für den Maschinennutzer oder andere Personen im Bereich der landwirtschaftlichen Maschine ausgelöst werden könnte.

Eine Ausgestaltung kann vorsehen, dass von der dritten Computereinrichtung an die Ausgabeeinrichtung eine Warn- oder Gefahrennachricht für den Maschinennutzer übermittelt und mit Hilfe der Ausgabeeinrichtung an den Maschinennutzer ausgegeben wird, zum Beispiel als Reaktion auf eine entsprechende Benutzereingabe der Service-Person über die dritte Computereinrichtung. Stellt die Service-Person nach dem Abruf der Maschinen-Diagnosedaten anhand dieser zum Beispiel fest, dass ein oder mehrere eingestellte und / oder gemessene Betriebsparameter eine Gefährdung darstellen könnten, kann die Service-Person auf diese Weise den Maschinennutzer warnen.

Das Abrufen der Maschinen-Diagnosedaten ist über eine Datenschnittstelle der landwirtschaftlichen Maschine möglich. Die Datenschnittstelle kann als Teil eines Datenbussystems der landwirtschaftlichen Maschine bereitgestellt sein, wobei das Datenbussystem zum Beispiel als ISO-Bus ausgeführt sein kann. Beispielweise kann vorgesehen sein, dass der Abruf der Maschinen-Diagnosedaten über die Datenschnittstelle von einem Bedienterminal der landwirtschaftlichen Maschine und / oder einem Gateway oder einer Busschnittstelle der landwirtschaftlichen Maschine erfolgt. Die zweite, auf der landwirtschaftlichen Maschine angeordnete Computereinrichtung kann mit dem Bedienterminal verbunden oder als Teil des Bedienterminals ausgebildet sein.

Die vorgeschlagene Technologie unterstützt einen sicheren Fernzugriff auf Maschinen-Diagnosedaten der landwirtschaftlichen Maschine, was insbesondere den Missbrauch eines solchen Fernzugriffs auf Informationen betreffend den Betrieb der landwirtschaftlichen Maschine besser verhindert.

Bei dem Verfahren kann das Abrufen der Maschinen-Diagnosedaten blockiert werden, wenn die Antwort-Nachricht eine Ablehnung des Maschinennutzers für die Diagnosezugriff-Anforderung anzeigt. Nachdem die Diagnosezugriff-Anforderung dem Maschinennutzer mittels der Ausgabeeinrichtung zur Kenntnis gebracht wurde, kann der Maschinennutzer einen solchen Diagnosezugriff ablehnen. Hierzu kann die Ausgabeeinrichtung eine entsprechende ablehnende Antwort-Eingabe des Maschinennutzers empfangen, um hierauf die (ablehnende) Antwort-Nachricht bereitzustellen.

Es kann vorgesehen sein, auf die ablehnende Antwort-Nachricht des Maschinennutzers die Datenverbindung zwischen der landwirtschaftlichen Maschine, beispielsweise eine Datenverbindung zur zweiten Computereinrichtung, zum Bedienterminal der landwirtschaftlichen Maschine oder zur Datenschnittstelle der landwirtschaftlichen Maschine, und der ersten Computereinrichtung des Service-Zentrums zu unterbrechen. Eine solche Unterbrechung kann zum Beispiel von der ersten Computereinrichtung auf den Empfang der ablehnenden Antwort-Nachricht ausgeführt werden.

Bei dem Verfahren kann weiterhin Folgendes vorgesehen sein: Bereitstellen von Identifikationsdaten, welche die Service-Person identifizieren, in der ersten Computereinrichtung; Bereitstellen der Diagnosezugriff-Anforderung, derart, dass die Diagnosezugriff-Anforderung die Identifikationsdaten umfasst; und Ausgeben der Diagnosezugriff-Anforderung mit den Identifikationsdaten an den Maschinennutzer mittels der Ausgabeeinrichtung. Bei dieser Ausführungsform ist eine weitere Sicherheitsmaßnahme oder -stufe für den sicheren Zugriff zum Abrufen der Maschinen-Diagnosedaten vorgesehen.

Die Identifikationsdaten identifizieren die Service-Person, zum Beispiel anhand einer oder mehrerer personenidentifizierenden Angaben aus der folgenden Gruppe: E-Mail-Adresse, Name, Codename der Person und Pseudonym. Die Identifikationsdaten sind von der Diagnosezugriff-Anforderung umfasst und werden mit dieser übertragen, um sie im Rahmen der Ausgabe der Diagnosezugriff-Anforderung oder getrennt hiervon an den Maschinennutzer auszugeben. Haben Maschinennutzer und Service-Person beim Übertragen des Anfragecodes an die Service-Person auch die Identifikationsdaten ausgetauscht, so kann der Maschinennutzer anhand der Identifikationsdaten in der Diagnosezugriff-Anforderung prüfen, ob diese tatsächlich von der Service-Person ausgelöst oder initiiert wurde, an welche der Anfragecode zuvor übermittelt wurde.

Beispielsweise können Maschinennutzer und Service-Person Anfragecode und Identifikationsdaten per Telefongespräch, per übermitteltem Datenmatrixcode wie QR-Code und / oder per SMS-Nachricht ausgetauscht haben. Hierbei kann vorgesehen sein, dass Benutzereingaben mittels Spracherkennung erfasst werden, zum Beispiel eine entsprechende Spracheingabe der Service-Person an dem zweiten Nutzerendgerät. Hierfür verfügt das zweite Nutzerendgerät über eine Spracherkennungs-Applikation. Alternativ oder ergänzend kann ein Datenaustausch mittels Chatbot, auch Chatterbot oder kurz Bot, vorgesehen sein. Hierbei handelt es sich um ein textbasiertes Dialogsystem, das Chatten mit einem technischen System erlaubt. Er hat je einen Bereich zur Textein- und -ausgabe, über die sich in natürlicher Sprache mit dem System kommunizieren lässt.

Bei einer Ausgestaltung des Verfahrens kann weiterhin Folgendes vorgesehen sein: Ausbilden des zweiten Datenkanals ausgehend von dem ersten Nutzerendgerät, welches dem Maschinennutzer zugeordnet ist, zum Übertragen des Anfragecodes über den zweiten Datenkanal; Empfangen einer Benutzereingabe des Maschinennutzers, welche den Anfragecode umfasst, in dem ersten Nutzerendgerät und Übertragen des Anfragecodes von dem ersten Nutzerendgerät über die zweite Datenverbindung.

Mit Hilfe des zweiten Datenkanals wird der Anfragecode von dem ersten Nutzerendgerät, welches dem Maschinennutzer zugeordnet ist, an die Service-Person übermittelt, um schließlich in der dritten Computereinrichtung empfangen zu werden. Die Benutzereingabe des Maschinennutzers an dem ersten Nutzerendgerät, kann als Sprach- und / oder Texteingabe ausgeführt werden, um so den Anfragecode im ersten Nutzerendgerät zu empfangen.

Von dem ersten Nutzerendgerät kann der Anfragecode direkt an die dritte Computereinrichtung übermittelt werden, zum Beispiel mittels kabelloser Datenübertragung. Alternativ kann die Service-Person den Anfragecode über ein zweites Nutzerendgerät, welches der Service-Person zugeordnet ist, empfangen und den Anfragecode dann mittels einer Benutzereingabe in die dritte Computereinrichtung eingeben. Bei dem zweiten Nutzerendgerät kann es sich zum Beispiel um ein Mobiltelefon oder einen Laptop-Computer handeln.

In einer Ausgestaltung führen Maschinennutzer und Service-Person ein Telefongespräch, so dass der Anfragecode mit Hilfe von Audiodaten vom Maschinennutzer an die Service-Person übermittelt wird. Ähnlich kann hierbei beispielsweise vorgesehen sein, dass die Service-Person die Identifikationsdaten dem Maschinennutzer mittels Audiodaten überträgt.

In den verschiedenen Ausführungsformen erfolgt die Übertragung des Anfragecodes ausgehend von dem ersten Nutzerendgerät über einen Datenkanal, welcher getrennt ist von dem Datenkanal, über den die Datenkommunikation zwischen der Ausgabeeinrichtung und der ersten Computereinrichtung erfolgt. Dies ist geeignet, die Sicherheit des Verfahrens zu unterstützen.

Bei dem Verfahren kann eine der folgenden Ausführungsformen vorgesehen sein: (i)Ausbilden des zweiten Datenkanals von dem ersten Nutzerendgerät zu der dritten Computereinrichtung und (ii) Ausbilden des zweiten Datenkanals von dem ersten Nutzerendgerät zu einem zweiten Nutzerendgerät, welches der Service-Person zugeordnet ist, wobei hierbei Folgendes vorgesehen ist: Empfangen des Anfragecodes in dem zweiten Nutzerendgerät, Ausgeben des Anfragecodes über eine Ausgabeeinrichtung des zweiten Nutzerendgeräts an die Service-Person und Empfangen einer Benutzereingabe der Service-Person, welche den Anfragecode umfasst, in der dritten Computereinrichtung. Der Anfragecode kann somit in dem zweiten Nutzerendgerät empfangen werden, welches der Service-Person zugeordnet ist, sei es in Form einer Sprach- und / oder Textnachricht, worauf die Anfragecode mittels der Nutzereingabe der Service-Person in der dritten Computereinrichtung empfangen wird. Alternativ ist ein direkter Empfang der Datenübermittlung über den zweiten Datenkanal in der dritten Computereinrichtung vorgesehen.

In der ersten Computereinrichtung kann zumindest ein Teil der folgenden Zuordnungsdaten gespeichert werden: (i) erste Zuordnungsdaten, die eine Zuordnung zwischen der Service-Anforderung und dem Anfragecode anzeigen; und (ii) zweite Zuordnungsdaten, die eine Zuordnung zwischen der Service-Anforderung und der Diagnosezugriff-Anforderung anzeigen. Die ersten Zuordnungsdaten zeigen eine Zugehörigkeit des Anfragecodes zu der zuvor erhaltenen Service-Anforderung an. Die zweiten Zuordnungsdaten zeigen eine Zughörigkeit der Diagnosezugriff-Anforderung zu der zuvor erhaltenen Service-Anforderung an. Es kann vorgesehen sein, weitere Zuordnungsdaten in der ersten Computereinrichtung zu speichern, die eine Zuordnung zwischen dem Anfragecode und der Diagnosezugriff-Anforderung anzeigen. Mittels Hinterlegen der ersten Zuordnungsdaten ist die erste Computereinrichtung auf den Empfang des Anfragecodes von der dritten Computereinrichtung in der Lage, diesen empfangenen Anforderungscode der ursprünglichen Service-Anforderung für eine entfernte Diagnose und / oder Unterstützung durch das Service-Zentrum, also die Service-Person, zuzuordnen und kann hierauf für diese Service-Anforderung die Diagnosezugriff-Anforderung erzeugen oder bereitstellen. Wird der Anforderungscode von der dritten Computereinrichtung in der ersten Computereinrichtung empfangen, kann diese prüfen, ob zu diesem eine Service-Anforderung vorliegt. Wenn dies nicht der Fall ist, könnte es sich um einen missbräuchlichen Versuch zum Datenzugriff handeln. Die jeweiligen Zuordnungsdaten können zum Beispiel mittels einer entsprechenden Zuordnungstabelle hinterlegt oder bereitgestellt werden.

Bei dem Verfahren kann eine der folgenden Ausführungsformen vorgesehen sein: (i) die landwirtschaftliche Maschine ist mit einem Schlepper gebildet, und es werden Maschinen-Diagnosedaten für den Schlepper abgerufen; (ii) die landwirtschaftliche Maschine ist mit einer landwirtschaftlichen Arbeitsmaschine gebildet, und es werden Maschinen-Diagnosedaten für die landwirtschaftliche Arbeitsmaschine abgerufen; und (iii) die landwirtschaftliche Maschine ist als ein landwirtschaftliches Maschinensystem mit einem Schlepper und einer landwirtschaftlichen Arbeitsmaschine gebildet, die an den Schlepper angebaut oder gezogen ist, und es werden Maschinen-Diagnosedaten für den Schlepper und / oder die landwirtschaftliche Arbeitsmaschine abgerufen.

Ist die landwirtschaftliche Maschine mit dem Schlepper gebildet, kann dieser ein oder mehrere (landwirtschaftliche) Funktionselemente zum Ausführen von landwirtschaftlicher Arbeit tragen, beispielsweise eine Mähmaschine, ein Spritzgerät und / oder ein Bodenbearbeitungswerkzeug. Bei der landwirtschaftlichen Arbeitsmaschine kann es sich um eine selbstfahrende Arbeitsmaschine handeln, beispielsweise Spritzmaschine, Düngerstreuer, Sähmaschine, Erntefahrzeug, Mähmaschine oder dergleichen.

Bei dem landwirtschaftlichen Maschinensystem ist die landwirtschaftliche Arbeitsmaschine an den Schlepper angebaut oder gezogen. Die Maschinen-Diagnosedaten können für unterschiedliche Funktionselemente des Schleppers und / oder der landwirtschaftlichen Arbeitsmaschine abgerufen werden, insbesondere über eine dem Schlepper bzw. der landwirtschaftlichen Arbeitsmaschine zugeordnete Datenschnittstelle eines Datenbussystems der landwirtschaftlichen Maschine.

Ein Bedienterminal, mit dem insbesondere eine Nutzerschnittstelle für die Bedienung und Steuerung der landwirtschaftlichen Maschine durch den Maschinennutzer bereitgestellt ist, kann auf dem Schlepper oder der landwirtschaftlichen Arbeitsmaschine angeordnet sein, so dass ein Abruf von Maschinen-Diagnosedaten von dem Bedienterminal ausführbar ist, insbesondere mittels einer Datenkommunikation mit der zweiten Computereinrichtung, die als Teil des Bedienterminals gebildet sein kann. In einer Ausgestaltung bildet das Bedienterminal eine Nutzerschnittstelle für den Maschinennutzer zu der zweiten Computereinrichtung (Bordcomputer) der landwirtschaftlichen Maschine.

Beim Ausgeben von Anfragecode und / oder Diagnosezugriff-Anforderung kann zumindest einer der folgenden Schritte vorgesehen sein: (i) Ausgeben von Videodaten zum Anzeigen auf einer Anzeigeeinrichtung der Ausgabeeinrichtung und (ii) Ausgeben von Audiodaten über eine Lautsprechereinrichtung der Ausgabeeinrichtung. Videodaten bewirken eine Bilddarstellung auf der Anzeigeeinrichtung, zum Beispiel einem Display. Audiodaten werden über eine Lautsprechereinrichtung der Ausgabeeinrichtung ausgegeben.

Das Abrufen der Maschinen-Diagnosedaten kann weiterhin Folgendes umfassen: Abrufen von ersten Maschinen-Diagnosedaten, welche aktuelle Anzeigedaten umfassen, die eine aktuelle Bilddarstellung auf der Anzeigeeinrichtung anzeigen; Empfangen der ersten Maschinen-Diagnosedaten in der dritten Computereinrichtung und Ausgeben der ersten Maschinen-Diagnosedaten über eine Anzeigeeinrichtung der dritten Computereinrichtung. Bei dieser Ausführungsform ist vorgesehen, dass die abgerufenen ersten Maschinen-Diagnosedaten eine Bilddarstellung auf einer Anzeigeeinrichtung der Ausgabeeinrichtung umfassen, so dass die Bilddarstellung von der Anzeigeeinrichtung der Ausgabeeinrichtung als Kopie oder geänderte Bilddarstellung auf der Anzeigeeinrichtung der dritten Computereinrichtung dargestellt werden kann.

Die Service-Person kann auf diese Weise Bilddarstellungen auf der Anzeigeeinrichtung der Ausgabeeinrichtung der landwirtschaftlichen Maschine teilweise oder vollständig abrufen und sich auf der Anzeigeeinrichtung der dritten Computereinrichtung darstellen lassen. Insbesondere kann so die Bilddarstellung auf der Anzeigeeinrichtung des Bedienterminals der landwirtschaftlichen Maschine abgerufen werden, wobei die Bilddarstellung ihrerseits Maschinen-Diagnosedaten anzeigt, zum Beispiel voreingestellte Betriebsparameter und / oder gemessene Betriebsparameter für den Betrieb der landwirtschaftlichen Maschine.

Es kann vorgesehen sein, aktualisierte Anzeigedaten automatisch an die dritte Computereinrichtung zu übermitteln (im Rahmen des Abrufens der Maschinen-Diagnosedaten), wenn sich die Bilddarstellung oder die Anzeige auf der Anzeigeeinrichtung ändert. Alternativ oder ergänzend kann vorgesehen sein, die Anzeigedaten gemäß durch die Service-Person festlegbare Zeitintervalle wiederholt abzurufen. Auf diese Weise kann die Service-Person wiederholt den aktualisierten Status für Betriebsparameter einsehen.

Das Abrufen der Maschinen-Diagnosedaten kann in einem Ausführungsbeispiel weiterhin Folgendes umfassen: Abrufen von zweiten Maschinen-Diagnosedaten, welche aktuell auf der Anzeigeeinrichtung nicht dargestellte Diagnosedaten umfassen; Empfangen der zweiten Maschinen-Diagnosedaten in der dritten Computereinrichtung und Ausgeben der zweiten Maschinen-Diagnosedaten über die Anzeigeeinrichtung der dritten Computereinrichtung. Bei dieser Ausführungsform umfassen die abgerufenen Maschinen-Diagnosedaten, die nicht über die Anzeigeeinrichtung ausgegeben werden, sei es aktuell und / oder in der Vergangenheit.

So kann für die landwirtschaftliche Maschine vorgesehen sein, zum Beispiel fortdauernd Bewegungsdaten zu erfassen, insbesondere Ortskoordinaten und / oder Geschwindigkeitssignale für die Bewegung der landwirtschaftlichen Maschine im Betrieb, ohne dass diese Bewegungsdaten über die Anzeigeeinrichtung dem Maschinennutzer zur Kenntnis gebracht werden. Für die Ferndiagnose der Service-Person können solche Bewegungsdaten bei der Analyse jedoch von Interesse sein, insbesondere als ergänzende Information. Die nicht angezeigten Maschinen-Diagnosedaten können zum Beispiel in einer Speichereinrichtung der zweiten Computereinrichtung hinterlegt sein. Alternativ oder ergänzend kann eine Speicherung der nicht angezeigten Diagnosedaten in einem lokalen Speicher eines Funktionselement der landwirtschaftlichen Maschine vorgesehen sein, zum Beispiel einem Speicher einer elektrischen Steuereinheit (ECU - "Electronic Control Unit")), die einem Funktionselement der landwirtschaftlichen Maschine zugeordnet ist. Über die Datenschnittstelle und das Datenbussystem kann die zweite Computereinrichtung zum Abrufen hierauf zugreifen.

Das Abrufen der Maschinen-Diagnosedaten kann weiterhin Folgendes umfassen: Prüfen, ob aktualisierte erste / zweite Maschinen-Diagnosedaten vorliegen; und Abrufen der aktualisierten ersten / zweiten Maschinen-Diagnosedaten, wenn beim Prüfen festgestellt wird, das aktualisierte erste / zweite Maschinen-Diagnosedaten vorliegen.

Ein Steuerbefehl-Zugriff mittels der ersten Computereinrichtung auf eine Steuereinrichtung der landwirtschaftlichen Maschine kann blockiert werden, wobei die Steuereinrichtung betreibbar ist, Steuerbefehle zu empfangen und den Steuerbefehlen entsprechende Steuersignale zur Betriebssteuerung der landwirtschaftlichen Maschine bereitzustellen. Mit Hilfe des Steuerbefehls wird ein Betrieb der landwirtschaftlichen Maschine und / oder eines Funktionselements der landwirtschaftlichen Maschine betrieben oder in Betrieb gesetzt. Ein solcher Steuerbefehl-Zugriff ist bei dieser Ausgestaltung für die erste Computereinrichtung, also das Service-Zentrum, blockiert, so dass es insbesondere der Service-Person nicht möglich ist, mittels Steuerbefehls über die erste Computereinrichtung die landwirtschaftliche Maschine oder ein Funktionselement der landwirtschaftlichen Maschine zu starten oder zu betreiben.

Die in Verbindung mit dem Verfahren zum sicheren Abrufen von Maschinen-Diagnosedaten für die landwirtschaftliche Maschine vorangehend erläuterten Ausgestaltungen können im Zusammenhang mit dem System zum sicheren Abrufen von Maschinen-Diagnosedaten entsprechend vorgesehen sein.

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine schematische Darstellung für ein Verfahren zum sicheren Abrufen von Maschinen-Diagnosedaten für eine landwirtschaftliche Maschine;
- Fig. 2: eine schematische Darstellung für einen Ablauf eines Verfahrens zum sicheren Abrufen von Maschinen-Diagnosedaten für eine landwirtschaftliche Maschine;
- Fig. 3: eine schematische Darstellung für ein weiteres Verfahren zum sicheren Abrufen von Maschinen-Diagnosedaten für eine landwirtschaftliche Maschine;
- Fig. 4: eine schematische Darstellung für ein Verfahren zum sicheren Abrufen von Maschinen-Diagnosedaten für eine landwirtschaftliche Maschine, die als ein landwirtschaftliches Maschinensystem mit einem Schlepper und einer landwirtschaftlichen Arbeitsmaschine gebildet ist; und
- Fig. 5: eine schematische Darstellung für ein anderes Verfahren zum sicheren Abrufen von Maschinen-Diagnosedaten von einer landwirtschaftlichen Maschine, die als ein landwirtschaftliches Maschinensystem mit einem Schlepper und einer landwirtschaftlichen Arbeitsmaschine gebildet ist.

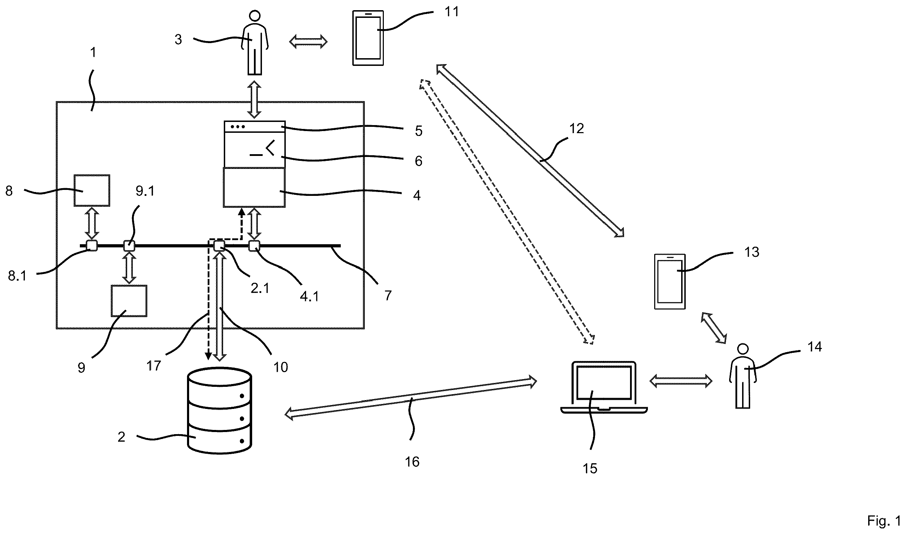

Fig. 1 zeigt eine schematische Darstellung für ein Verfahren zum sicheren Abrufen von Maschinen-Diagnosedaten für eine landwirtschaftliche Maschine 1, bei der es sich zum Beispiel um eine Sämaschine, eine Spritzmaschine, einen Düngerstreuer, eine Bodenbearbeitungsmaschine, eine Mähmaschine oder dergleichen handelt. Von der landwirtschaftlichen Maschine 1 sollen Maschinen-Diagnosedaten (oder kurz: Maschinedaten oder Diagnosedaten) mit Hilfe einer ersten oder durch eine erste Computereinrichtung 2 abgerufen werden, die einem Service-Zentrum zugeordnet ist. Das Service-Zentrum, welches zum Beispiel von einem Hersteller der landwirtschaftlichen Maschine 1 betrieben wird, ermöglicht es insbesondere, einem Maschinennutzer 3, welcher die landwirtschaftliche Maschine 1 betreibt oder betreiben möchte, mittels Fernzugriff Unterstützung zu gewähren, um dem Betrieb der landwirtschaftlichen Maschine 1 zu optimieren oder den Betrieb zu ermöglichen. Die erste Computereinrichtung 2 ist hierzu mit einem oder mehreren Prozessoren sowie einer oder mehreren zugeordneten Speichereinrichtungen gebildet. Die Prozessoren können mit Hilfe geeigneter Programmierung (Software) für die Aufgaben und Funktionen des Service-Zentrums hergerichtet werden.

Die landwirtschaftliche Maschine weist eine zweite Computereinrichtung 4 auf, die mit einem oder mehreren Prozessoren sowie einer zugeordneten Speichereinrichtung gebildet ist. Mit der zweiten Computereinrichtung 4 kann ein Bordcomputer der landwirtschaftlichen Maschine 1 gebildet sein, wie dies in verschiedenen Ausführungen als solches bekannt ist. In dem dargestellten Ausführungsbeispiel ist die zweite Computereinrichtung 4 zumindest teilweise mit einem Bedien- oder Nutzerterminal 5 integriert, welches über eine Ausgabe- / Eingabeeinrichtung 6 mit Anzeige verfügt. Das Bedienterminal 5 kann zum Beispiel auf einem Schlepper oder Traktor angeordnet sein, welcher mehrere Funktionselemente der landwirtschaftlichen Maschine 1 trägt. Wahlweise können bei der landwirtschaftlichen Maschine 1 mehrere Bedienterminal vorgesehen sein. Das Bedienterminal 5 dient insbesondere als Nutzerschnittstelle und ermöglicht es dem Maschinennutzer 3 zum Beispiel Eingaben zur Steuerung des Betriebs der landwirtschaftlichen Maschine 1 zu machen, wie dieses als solches in unterschiedlichen Ausführungsformen bekannt ist. Auf der Anzeige der Ausgabeeinrichtung 6 können zum Beispiel Betriebsparameter dem Maschinennutzer 3 zur Kenntnis gebracht werden, insbesondere voreingestellte Betriebsparameter ("settings") und / oder gemessene Betriebsparameter, die im Betrieb der landwirtschaftlichen Maschine 1 erfasst / gemessen und / oder analysiert werden, wofür die landwirtschaftliche Maschine 1 entsprechend eingerichtete Sensor- und / oder Messeinrichtungen aufweisen kann, beispielweise zum Messen von Orts- und / oder Geschwindigkeitsdaten.

Die gemessenen Betriebsparameter können zum Beispiel mit den voreingestellten Betriebsparametern verglichen werden, um den Betrieb der landwirtschaftlichen Maschine 1 im Rahmen der voreingestellten Betriebsparameter auszuführen.

Die landwirtschaftliche Maschine 1 weist ein Datenbussystem 7 auf, über welches elektronische Daten übermittelt werden können. Beispielsweise kann das Datenbussystem 7 dem ISO-Bus Standard entsprechend ausgeführt sein, insbesondere gemäß der Norm ISO 11783.

Der zweiten Computereinrichtung 4 ist eine Busschnittstelle 4.1 zugeordnet. In vergleichbarer Weise ist Funktionselementen 8, 9 der landwirtschaftlichen Maschine 1 eine jeweilige Busschnittstelle 8.1, 9.1 zugeordnet, welche jeweils den Datenaustausch über das Bussystem 7 ermöglicht. Die Funktionselemente 8, 9 der landwirtschaftlichen Maschine 1 können mit einer jeweils zugeordneten lokalen elektronischen Steuereinheit (ECU - "Electronic Control Unit") gebildet sein, über die eine Steuerung des jeweiligen Funktionselements im Betrieb ermöglicht ist.

Gemäß der Darstellung in Fig. 1 ist ein erster Datenkanal 10 zwischen der ersten Computereinrichtung 2 und dem Datenbussystem 7 über eine der ersten Computereinrichtung 2 zugeordnete Busschnittstelle 2.1 ausgebildet. Mittels bedarfsweise ausbildbarer Datenverbindungen über den ersten Datenkanal 10 kann die erste Computereinrichtung 2 mit Komponenten oder Funktionselementen der landwirtschaftlichen Maschine 1, die an das Datenbussystem 7 angeschlossen sind, elektronische Daten austauschen.

Bei der Anordnung gemäß Fig. 1 ist dem Maschinennutzer 3 ein erstes Nutzerendgerät 11 zugeordnet, bei dem es sich beispielsweise um ein Mobiltelefon oder einen Laptop-Computer handelt. Mit Hilfe des ersten Nutzerendgeräts 11 kann über einen zweiten Datenkanal 12, welcher getrennt von dem ersten Datenkanal 10 gebildet ist, eine Datenkommunikation zu einem zweiten Nutzerendgerät 13 ausgeführt werden, welches einer Service-Person 14 zugeordnet ist. Bei dem zweiten Nutzerendgerät 13 kann es sich um ein Mobiltelefon oder einem Laptop-Computer handeln. Es ermöglicht eine Datenkommunikation zwischen dem Maschinennutzer 3 und der Service-Person 14, zum Beispiel mittels Austausch von Sprach- und / oder Textnachrichten, beispielsweise im Rahmen eines Telefonats.

Der Service-Person 14 ist weiterhin eine dritte Computereinrichtung 15 zugeordnet, mittels der die Service-Person 14 über einen dritten Datenkanal 16 mit der ersten Computereinrichtung 2 des Service-Zentrums in Verbindung treten kann. Alternativ kann das zweite Nutzerendgerät 13 oder die dritte Computereinrichtung 15 sowohl für den Datenaustausch mit dem Maschinennutzer 3 wie auch den Datenaustausch mit der ersten Computereinrichtung 2 eingerichtet sein.

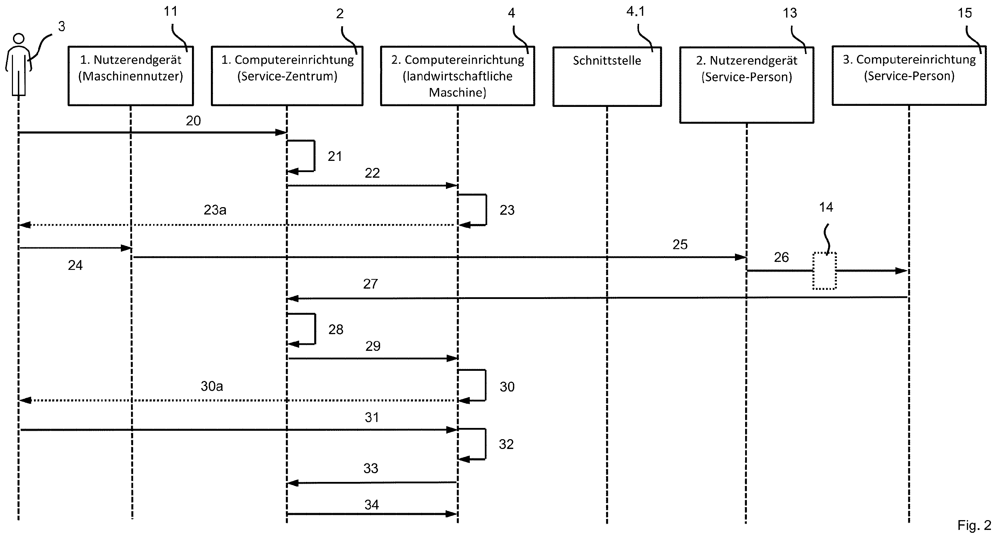

Mittels der in Fig. 1 dargestellten Anordnung kann ein Verfahren zum sicheren Abrufen von Maschinen-Diagnosedaten für die landwirtschaftliche Maschine 1 ausgeführt werden, was nachfolgend unter Bezugnahme auf Fig. 2 näher erläutert wird.

In Schritt 20 wird in der ersten Computereinrichtung 2 eine vom Maschinennutzer 3 initiierte Service-Anforderung empfangen. Bei der Ausgestaltung nach Fig. 1 kann der Maschinennutzer 3 die Service-Anforderung mittels Benutzereingabe über das Bedienterminal 5 auslösen. Alternativ kann vorgesehen sein, dass der Maschinennutzer 3 die Service-Anforderung mittels einer Benutzereingabe an dem ersten Nutzerendgerät 11 auslöst, worauf die Service-Anforderung über eine drahtlose Datenkommunikation an die erste Computereinrichtung 2 übermittelt werden kann. Auch die Verwendung des ersten Nutzerendgeräts 11 zum Erfassen einer Benutzereingabe und dessen Übermittlung an eine Datenschnittstelle des Bedienterminals 5 kann vorgesehen sein.

Auf dem Empfang der Service-Anforderung in der ersten Computereinrichtung 2 wird ein Anfragecode erzeugt, zum Beispiel eine Zufallszahl in Form eines alphanumerischen Codes, welcher der empfangenen Service-Anforderung zugeordnet wird (Schritt 21). Auch kann vorgesehen sein, dass der Anfragecode einen Datenmatrixcode, zum Beispiel einen QR-Code, umfasst oder von diesem gebildet ist. Die Bereitstellung des Anfragecodes in der ersten Computereinrichtung 2 erfolgt als Reaktion auf den Empfang der Service-Anforderung. Für zukünftige oder weitere Service-Anforderungen ist vorgesehen, dann einen anderen oder separaten Anfangscode bereitzustellen.

Der Anfragecode wird im Schritt 22 an die zweite Computereinrichtung 4 der landwirtschaftlichen Maschine 1 übertragen, was gemäß Fig. 1 über den ersten Datenkanal 10 und das Busdatensystem 7 erfolgt. Mit Hilfe der Ausgabeeinrichtung 6 des Bedienterminals 5 wird der Anfragecode mittels Video- und / oder Audioausgabe im Schritt 23 ausgegeben, insbesondere an den Maschinennutzer 3 (vgl. gestichelte Linie 23a). Hierauf übermittelt der Maschinennutzer 3 den Anfragecode mittels des ersten Nutzerendgeräts 11 an das zweite Nutzerendgerät 13, welches der Service-Person 14 zugeordnet ist, zum Beispiel im Rahmen eines Telefonats zwischen Maschinennutzer 3 und Service-Person 14 (Schritte 24, 25). Auch kann vorgesehen sein, dass der Maschinennutzer 3 mittels des ersten Nutzerendgeräts 11 einen vom Anfragecode umfassten Datenmatrixcode einscannt und übermittelt.

Der Anfragecode wird in der dritten Computereinrichtung 15 empfangen (Schritt 26). Hierzu gibt zum Beispiel die Service-Person 14 den empfangenen Anfragecode in die dritte Computereinrichtung 15 ein, beispielweise über eine Tastatur der dritten Computereinrichtung 15. Alternativ kann vorgesehen sein, dass der Anfragecode von dem ersten Nutzerendgerät 11 über eine drahtlose Schnittstelle zur Datenkommunikation der dritten Computereinrichtung 15 direkt in der dritten Computereinrichtung 15 empfangen wird, wahlweise unter Umgehung oder Einbeziehung des zweiten Nutzerendgeräts 13. Die Service-Person 14 kann hierzu zum Beispiel eine drahtlose Datenkommunikation zwischen der dritten Computereinrichtung 15 und dem ersten Nutzerendgerät 11 ausbilden.

Von der dritten Computereinrichtung 15 wird der empfangene Anfragecode im Schritt 27 über eine weitere Datenverbindung 16 zwischen der ersten und der dritten Computereinrichtung 2, 15 an die erste Computereinrichtung 2 übermittelt.

In der ersten Computereinrichtung 2 wird geprüft oder bestimmt, ob für den Anfragecode eine vorherige Service-Anforderung vorliegt. Wenn dies der Fall ist, wird im Schritt 28 eine der Service-Anforderung und dem Anfragecode zugeordnete Diagnosezugriff-Anforderung erzeugt, welche im Schritt 29 über den ersten Datenkanal 10 an die zweite Computereinrichtung 4 in der landwirtschaftlichen Maschine 1 übermittelt wird. Die Diagnosezugriff-Anforderung zeigt an, dass ein Zugriff auf oder Abruf von Maschine-Diagnosedaten durch das Service-Zentrum angefragt oder angefordert wird, also durch die erste Computereinrichtung 2.

Die Diagnosezugriff-Anforderung wird im gezeigten Beispiel nach Fig. 1 im Schritt 30 über das Bedienterminal 5 ausgegeben, insbesondere zur Kenntnisnahme durch dem Maschinenbenutzer 3 (vgl. gestichelte Linie 30a). Die Ausgabe der Diagnosezugriff-Anforderung kann ergänzend eine Aufforderung an den Maschinennutzer 3 umfassen, den Diagnosezugriff zu bestätigen oder zu erlauben.

Im Schritt 31 wird eine Antwort-Eingabe des Maschinennutzers 3 über das Bedienterminal 5 in der zweiten Computereinrichtung 4 empfangen, um im Schritt 32 eine die Antwort-Eingabe anzeigende Antwort-Nachricht in der zweiten Computereinrichtung 4 bereitzustellen. Im Schritt 33 wird die Antwort-Nachricht von der zweiten Computereinrichtung 4 über den ersten Datenkanal 10 an die erste Computereinrichtung 2 übertragen.

Wenn die Antwort-Nachricht für die Diagnosezugriff-Anforderung eine Bestätigung oder eine Zustimmung des Maschinennutzers 3 anzeigt, der Maschinennutzer 3 also einen Diagnosezugriff zulassen möchte, werden im Schritt 34 Maschinen-Diagnosedaten für die landwirtschaftliche Maschine 1 durch die erste Computereinrichtung 2 abgerufen (vgl. gestrichelte Linie 17 in Fig. 1). Die Maschinen-Diagnosedaten können in der dritten Computereinrichtung 15 für die Service-Person 14 bereitgestellt werden, insbesondere mittels Übertragen über die weitere Datenverbindung 16.

Zeigt die Antwort-Nachricht eine Ablehnung des Maschinennutzers 3 an, wird die Datenverbindung über den ersten Datenkanal 10 unterbrochen, sei es durch die zweite Computereinrichtung 4 in der landwirtschaftlichen Maschine 1 oder die erste Computereinrichtung 2 des Service-Zentrums. Hierdurch ist ein Zugriff zum Abrufen von Maschinen-Diagnosedaten verhindert, wenn der Maschinennutzer 3 dies auf die Diagnosezugriff-Anforderung ablehnt.

Das Abrufen der Maschinen-Diagnosedaten kann insbesondere das Abrufen von Anzeigedaten umfassen, die es ermöglichen, auf der dritten Computereinrichtung 15 Anzeigedaten anzuzeigen, die einer Darstellung auf der Anzeigeeinrichtung der Ausgabeeinrichtung 6 des Bedienterminals 5 entsprechen. Auf diese Weise kann eine Kopie der Anzeige vom Bedienterminal 5 an die Anzeige der dritten Computereinrichtung 15 übertragen werden. Die angezeigte Bild- oder Videodarstellung kann zum Beispiel voreingestellte und / oder gemessene Betriebsdaten für die landwirtschaftliche Maschine 1 umfassen.

Eine Erweiterung des beschriebenen Verfahrens zum sicheren Abrufen von Maschinen-Diagnosedaten kann vorsehen, dass im Schritt 25, in welchem der Anfragecode vom Maschinennutzer 3 mittels seines ersten Nutzerendgeräts 11 an das zweite Nutzerendgerät 13 der Service-Person 14 übertragen wird, Identifikationsdaten in umgekehrter Richtung von dem zweiten Nutzerendgerät 13 der Service-Person 14 an das erste Nutzerendgerät 11 des Maschinennutzers 3 übermittelt werden. Bei den Identifikationsdaten handelt es sich um die Service-Person 14 identifizierende Daten, zum Beispiel eine E-Mail-Adresse, ein Name, ein Pseudonym, ein Codename oder ein Datenmatrixcode wie zum Beispiel QR-Code. Die Service-Person 14 gibt die Identifikationsdaten dann über die dritte Computereinrichtung 15 an die erste Computereinrichtung 2, so dass die Identifikationsdaten in die Diagnosezugriff-Anforderung aufgenommen und als Teil dieser an die zweite Computereinrichtung 4 der landwirtschaftlichen Maschine 1 übermittelt werden können, um die Identifikationsdaten zusammen mit der Diagnosezugriff-Anforderung über die Ausgabeeinrichtung 6 des Bedienterminals 5 an den Maschinennutzer 3 auszugeben. Der Maschinennutzer 3 kann dann prüfen, ob die als Teil der Diagnosezugriff-Anforderung übermittelten Identifikationsdaten mit den Identifikationsdaten übereinstimmen, welche er von der Service-Person 14 erhalten hat, zum Beispiel im geführten Telefonat. Wenn dies nicht der Fall ist, wird der Maschinennutzer 3 die Datenzugriff-Anforderung ablehnen. Auf diese Weise ist eine zusätzliche Sicherheitsstufe vorgesehen.

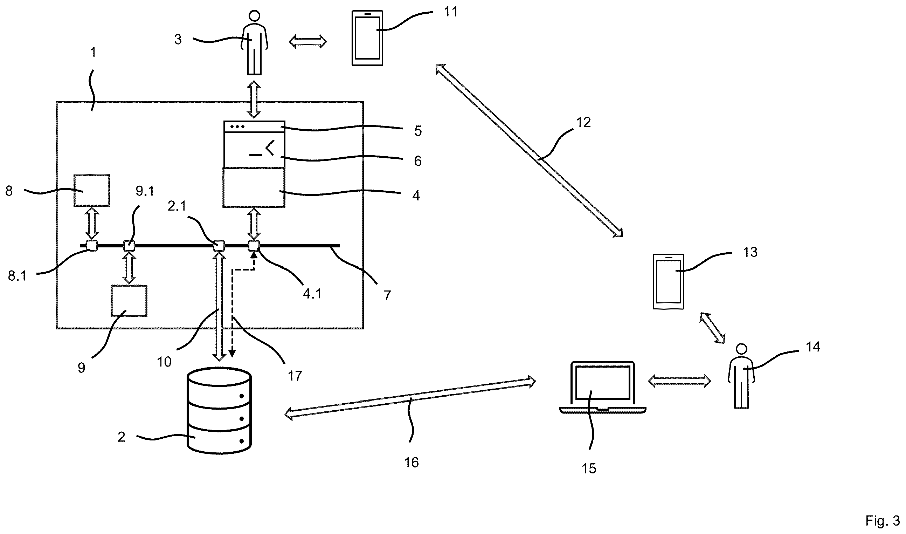

Nachdem der Maschinennutzer 3 in seiner Antwort-Nachricht als Reaktion auf die Diagnosezugriff-Anforderung dem Abrufen der Maschinen-Diagnosedaten zugestimmt hat, kann gemäß Fig. 3, alternativ zur Ausführung nach Fig. 1 der Zugriff durch die erste Computereinrichtung 2 auf eine der Datenschnittstellen des Datenbussystems 7 erfolgen, zum Beispiel auf die Datenschnittstelle 4.1.

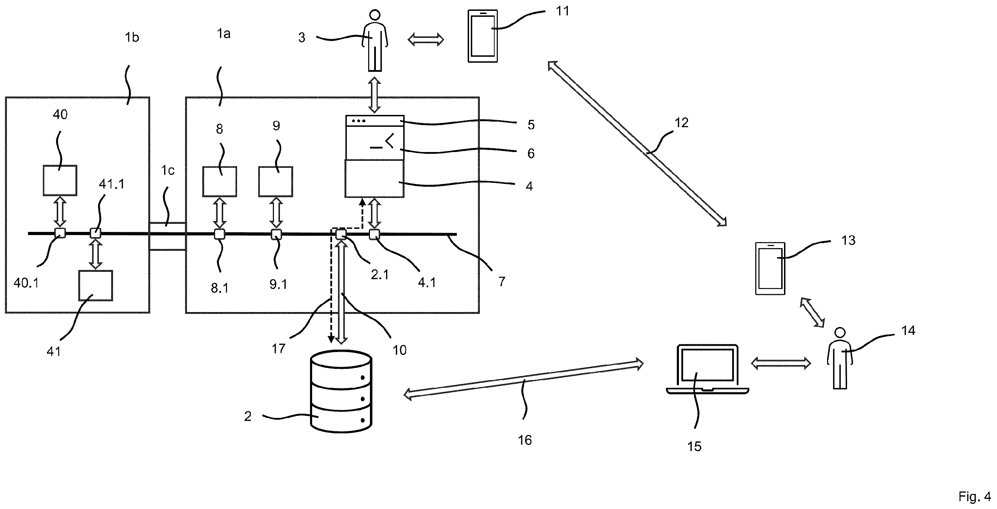

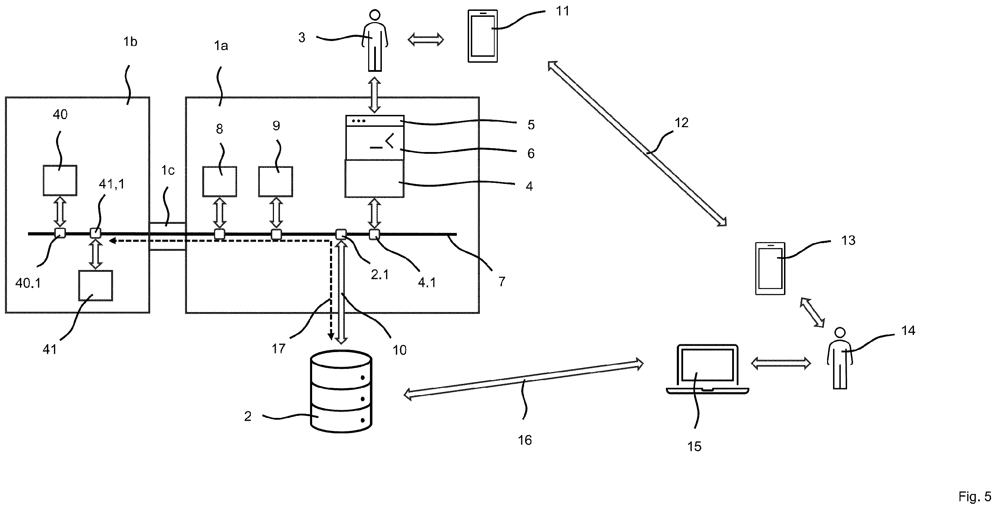

Fig. 4 und 5 zeigen jeweils eine schematische Darstellung für ein Verfahren zum sicheren Abrufen von Maschinen-Diagnosedaten für eine landwirtschaftliche Maschine, die als ein landwirtschaftliches Maschinensystem mit einem Schlepper 1a (wie Traktor) und einer landwirtschaftlichen Arbeitsmaschine 1b gebildet ist, die über eine Kopplungseinrichtung 1c koppeln, insbesondere lösbar. Das Datenbussystem 7 erstreckt sich über den Schlepper 1a sowie die hieran angehängte landwirtschaftliche Arbeitsmaschine 1b. Funktionselemente 40, 41 des Schlepper 1a sind über zugeordnete Datenschnittstellen 40.1, 41.1 an das Datenbussystem 7 angekoppelt.

Das Abrufen der Maschinen-Diagnosedaten erfolgt, vergleichbar der Ausführung in Fig. 1, von der zweiten Computereinrichtung 4 (vgl. Fig. 4) dem Bedienterminal 5 oder von einer Datenschnittstelle 41.1 der landwirtschaftlichen Arbeitsmaschine 1b, wobei Maschinen-Diagnosedaten für den Schlepper 1a und / oder die landwirtschaftlichen Arbeitsmaschine 1b umfasst sein können. Die jeweils eingezeichnete gestrichelte Linie 17 zeigt schematisch den Datenzugriff zum Abrufen der Maschinen-Diagnosedaten unter Nutzung des ersten Datenkanals 10 zwischen der erste Computereinrichtung 2 und dem Datenbussystem 7.

Erfolgt der Zugriff zum Abrufen der Maschinen-Diagnosedaten (nur) auf eine der Datenschnittstellen des Datenbussystems 7, umfassen die abgerufenen Maschinen-Diagnosedaten potentiell keine Anzeigedaten, also insbesondere keine Anzeigedaten für die Darstellungen auf der Anzeigeeinrichtung der Ausgabeeinrichtung 6 des Bedienterminals 5. Vielmehr können auf diese Weise zum Beispiel Betriebsdaten abgerufen werden, die für eine Anzeige nicht oder noch nicht vorgesehen sind.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Verfahren zum sicheren Abrufen von Maschinen-Diagnosedaten für eine landwirtschaftliche Maschine, mit
- Empfangen einer Service-Anforderung eines Maschinennutzers einer landwirtschaftlichen Maschine (1; 1a, 1b) in einer ersten Computereinrichtung (2), die einem Service-Zentrum zugeordnet ist;
- Bereitstellen eines der Service-Anforderung zugeordneten Anfragecodes in der ersten Computereinrichtung (2) als Reaktion auf das Empfangen der Service-Anforderung;
- Übertragen des Anfragecodes über einen ersten Datenkanal von der ersten Computereinrichtung (2) an eine Ausgabeeinrichtung aus der folgenden Gruppe:
- eine erste Ausgabeeinrichtung (5), die mit einer zweiten Computereinrichtung (4) verbunden ist, welche auf der landwirtschaftlichen Maschine (1; 1a, 1b) angeordnet ist, und
- eine zweite Ausgabeeinrichtung eines ersten Nutzerendgeräts (11), welches dem Maschinennutzer zugeordnet ist;
- Ausgeben des Anfragecodes an den Maschinennutzer mittels der Ausgabeeinrichtung;
- Übertragen des Anfragecodes über einen zweiten Datenkanal, die getrennt von dem ersten Datenkanal ausgebildet wird, und Empfangen des Anfragecodes in einer dritten Computereinrichtung (15), die einer Service-Person zugeordnet ist;
- Übertragen des Anfragecodes von der dritten Computereinrichtung (15) an die erste Computereinrichtung (2) und Bereitstellen einer Diagnosezugriff-Anforderung als Reaktion auf den Empfang des Anfragecodes in der ersten Computereinrichtung (2);
- Übertragen der Diagnosezugriff-Anforderung sowie Empfangen der Diagnosezugriff-Anforderung und Ausgeben der Diagnosezugriff-Anforderung an den Maschinennutzer mittels der Ausgabeeinrichtung;
- Empfangen einer Antwort-Eingabe des Maschinennutzers in der Ausgabeeinrichtung und Bereitstellen einer Antwort-Nachricht als Reaktion auf das Empfangen der Antwort-Eingabe;
- Empfangen der Antwort-Nachricht in der ersten Computereinrichtung (2) und
- Abrufen von Maschinen-Diagnosedaten für die landwirtschaftliche Maschine (1; 1a, 1b) über eine Datenschnittstelle (2.1) der landwirtschaftlichen Maschine (1; 1a, 1b), wenn die Antwort-Nachricht eine Bestätigung des Maschinennutzers für die Diagnosezugriff-Anforderung anzeigt, und Empfangen der Maschinen-Diagnosedaten in der ersten Computereinrichtung (2).

2. Verfahren nach Anspruch 1, **dadurch gekennzeichnet, dass** das Abrufen der Maschinen-Diagnosedaten blockiert wird, wenn die Antwort-Nachricht eine Ablehnung des Maschinennutzers für die Diagnosezugriff-Anforderung anzeigt.

3. Verfahren nach Anspruch 1 oder 2, **dadurch gekennzeichnet, dass** weiterhin Folgendes vorgesehen ist:
- Bereitstellen von Identifikationsdaten, welche die Service-Person identifizieren, in der ersten Computereinrichtung (2);
- Bereitstellen der Diagnosezugriff-Anforderung, derart, dass die Diagnosezugriff-Anforderung die Identifikationsdaten umfasst; und
- Ausgeben der Diagnosezugriff-Anforderung mit dem Identifikationsdaten an den Maschinennutzer mittels der Ausgabeeinrichtung.

4. Verfahren nach mindestens einem der vorangehenden Ansprüche, dadurch **gekenn**- **zeichnet**, dass weiterhin Folgendes vorgesehen ist:
- Ausbilden des zweiten Datenkanals ausgehend von dem ersten Nutzerendgerät (11), welches dem Maschinennutzer zugeordnet ist, zum Übertragen des Anfragecodes über den zweiten Datenkanal;
- Empfangen einer Benutzereingabe des Maschinennutzers, welche den Anfragecode umfasst, in dem ersten Nutzerendgerät (11) und
- Übertragen des Anfragecodes von dem ersten Nutzerendgerät (11) über den zweiten Datenkanal.

5. Verfahren nach Anspruch 4, **dadurch gekennzeichnet, dass** eine der folgenden Ausführungsformen vorgesehen ist:
- Ausbilden des zweiten Datenkanals von dem ersten Nutzerendgerät (11) zu der dritten Computereinrichtung (15) und
- Ausbilden des zweiten Datenkanals von dem ersten Nutzerendgerät (11) zu einem zweiten Nutzerendgerät (13), welches der Service-Person zugeordnet ist, wobei hierbei weiterhin Folgendes vorgesehen ist:
- Empfangen des Anfragecodes in dem zweiten Nutzerendgerät (13),
- Ausgeben des Anfragecodes über eine Ausgabeeinrichtung des zweiten Nutzerendgeräts (13) an die Service-Person und
- Empfangen einer Benutzereingabe der Service-Person, welche den Anfragecode umfasst, in der dritten Computereinrichtung (15).

6. Verfahren nach mindestens einem der vorangehenden Ansprüche, dadurch **gekenn- zeichnet**, dass in der ersten Computereinrichtung (2) zumindest ein Teil der folgenden Zuordnungsdaten gespeichert wird:
- erste Zuordnungsdaten, die eine Zuordnung zwischen der Service-Anforderung und dem Anfragecode anzeigen; und
- zweite Zuordnungsdaten, die eine Zuordnung zwischen der Service-Anforderung und der Diagnosezugriff-Anforderung anzeigen.

7. Verfahren nach mindestens einem der vorangehenden Ansprüche, **dadurch gekennzeichnet, dass** eine der folgenden Ausführungsformen vorgesehen ist:
- die landwirtschaftliche Maschine (1) ist mit einem Schlepper gebildet, und es werden Maschinen-Diagnosedaten für den Schlepper abgerufen;
- die landwirtschaftliche Maschine (1) ist mit einer landwirtschaftlichen Arbeitsmaschine gebildet, und es werden Maschinen-Diagnosedaten für die landwirtschaftliche Arbeitsmaschine abgerufen; und
- die landwirtschaftliche Maschine ist als ein landwirtschaftliches Maschinensystem mit einem Schlepper (1a) und einer landwirtschaftlichen Arbeitsmaschine (1b) gebildet, die an den Schlepper angehängt ist, und es werden Maschinen-Diagnosedaten für den Schlepper (1a) und / oder die landwirtschaftliche Arbeitsmaschine (1b) abgerufen.

8. Verfahren nach mindestens einem der vorangehenden Ansprüche, dadurch **gekenn**- **zeichnet**, dass beim Ausgeben von Anfragecode und / oder Diagnosezugriff-Anforderung zumindest einer der folgenden Schritte vorgesehen ist:
- Ausgeben von Videodaten zum Anzeigen auf einer Anzeigeeinrichtung der Ausgabeeinrichtung und
- Ausgeben von Audiodaten über eine Lautsprechereinrichtung der Ausgabeeinrichtung.

9. Verfahren nach Anspruch 8, **dadurch gekennzeichnet, dass** das Abrufen der Maschinen-Diagnosedaten weiterhin Folgendes umfasst:
- Abrufen von ersten Maschinen-Diagnosedaten, welche aktuelle Anzeigedaten umfassen, die eine aktuelle Bilddarstellung auf der Anzeigeeinrichtung anzeigen;
- Empfangen der ersten Maschinen-Diagnosedaten in der dritten Computereinrichtung (15) und
- Ausgeben der ersten Maschinen-Diagnosedaten über eine Anzeigeeinrichtung der dritten Computereinrichtung (15).

10. Verfahren nach mindestens einem der vorangehenden Ansprüche, dadurch **gekenn**- **zeichnet**, dass das Abrufen der Maschinen-Diagnosedaten weiterhin Folgendes umfasst:
- Abrufen von zweiten Maschinen-Diagnosedaten, welche aktuell auf der Anzeigeeinrichtung nicht dargestellte Diagnosedaten umfassen;
- Empfangen der zweiten Maschinen-Diagnosedaten in der dritten Computereinrichtung (15) und
- Ausgeben der zweiten Maschinen-Diagnosedaten über die Anzeigeeinrichtung der dritten Computereinrichtung.

11. Verfahren nach Anspruch 9 oder 10, **dadurch gekennzeichnet, dass** das Abrufen der Maschinen-Diagnosedaten weiterhin Folgendes umfasst:
- Prüfen, ob aktualisierte erste / zweite Maschinen-Diagnosedaten vorliegen; und
- Abrufen der aktualisierten der aktualisierten ersten / zweiten Maschinen-Diagnosedaten, wen beim Prüfen festgestellt wird, das aktualisierte erste / zweite Maschinen-Diagnosedaten vorliegen.

12. Verfahren nach mindestens einem der vorangehenden Ansprüche, **dadurch gekennzeichnet, dass** ein Steuerbefehl-Zugriff mittels der ersten Computereinrichtung (2) auf eine Steuereinrichtung der landwirtschaftlichen Maschine (1; 1a, 1b) blockiert wird, wobei die Steuereinrichtung betreibbar ist, Steuerbefehle zu empfangen und den Steuerbefehlen entsprechende Steuersignale zur Betriebssteuerung der landwirtschaftlichen Maschine (1; 1a, 1b) bereitzustellen.

13. System zum sicheren Abrufen von Maschinen-Diagnosedaten für eine landwirtschaftliche Maschine, mit einer landwirtschaftlichen Maschine (1; 1a, 1b), einer ersten Computereinrichtung (2), die einem die einem Service-Zentrum zugeordnet ist, einer zweiten Computereinrichtung (4), die auf der landwirtschaftlichen Maschine (1; 1a, 1b) angeordnet ist, und einer dritten Computereinrichtung (15), die einer Service-Person zugeordnet ist, wobei das System für Folgendes eingerichtet ist:
- Empfangen einer Service-Anforderung des Maschinennutzers der landwirtschaftlichen Maschine (1; 1a, 1b) in der ersten Computereinrichtung (2);
- Bereitstellen eines der Service-Anforderung zugeordneten Anfragecodes in der ersten Computereinrichtung (2) als Reaktion auf das Empfangen der Service-Anforderung;
- Übertragen des Anfragecodes über einen ersten Datenkanal von der ersten Computereinrichtung (2) an eine Ausgabeeinrichtung aus der folgenden Gruppe:
- eine erste Ausgabeeinrichtung (5), die mit einer zweiten Computereinrichtung (4) verbunden ist, welche auf der landwirtschaftlichen Maschine (1; 1a, 1b) angeordnet ist, und
- eine zweite Ausgabeeinrichtung eines ersten Nutzerendgeräts (11), welches dem Maschinennutzer zugeordnet ist;
- Ausgeben des Anfragecodes an den Maschinennutzer mittels der Ausgabeeinrichtung;
- Übertragen des Anfragecodes über einen zweiten Datenkanal, die getrennt von dem ersten Datenkanal ausgebildet wird, und Empfangen des Anfragecodes in der dritten Computereinrichtung (15);
- Übertragen des Anfragecodes von der dritten Computereinrichtung (15) an die erste Computereinrichtung (2) und Bereitstellen einer Diagnosezugriff-Anforderung als Reaktion auf den Empfang des Anfragecodes in der ersten Computereinrichtung (2);
- Übertragen der Diagnosezugriff-Anforderung sowie Empfangen der Diagnosezugriff-Anforderung und Ausgeben der Diagnosezugriff-Anforderung an den Maschinennutzer mittels der Ausgabeeinrichtung;
- Empfangen einer Bestätigungs-Eingabe des Maschinennutzers in der Ausgabeeinrichtung und Bereitstellen einer Bestätigungs-Nachricht als Reaktion auf das Empfangen der Bestätigungs-Eingabe;
- Empfangen der Bestätigungs-Nachricht in der ersten Computereinrichtung (2) und
- Abrufen von Maschinen-Diagnosedaten für die landwirtschaftliche Maschine (1; 1a, 1b) über eine Datenschnittstelle (2.1) der landwirtschaftlichen Maschine (1; 1a, 1b) und Empfangen der Maschinen-Diagnosedaten in der ersten Computereinrichtung (2).
